# EUROPEAN PATENT SPECIFICATION

(11) **EP 3 167 996 B1**
(45) Date of publication and mention of the grant of the patent: **07.11.2018**
(21) Application number: 16197883.8
(22) Date of filing: 09.11.2016
(51) Int. Cl.: B23K 26/02, B23K 26/08, D05C 7/10, D06C 23/02, B23K 26/03, B23K 26/04

(54) **PROCESS FOR THE CALIBRATION OF A COMBINED LASER CUTTING AND ENGRAVING AND EMBROIDERING SYSTEM AND A RELATIVE COMBINED LASER CUTTING AND ENGRAVING AND EMBROIDERING SYSTEM**
VERFAHREN ZUR KALIBRIERUNG EINES KOMBINIERTEN LASERSCHNEIDE-, GRAVIER- UND STICKSYSTEMS UND ZUGEHÖRIGES KOMBINIERTES LASERSCHNEIDE-, GRAVIER- UND STICKSYSTEM
PROCÉDÉ D'ÉTALONNAGE D'UN SYSTÈME DE DÉCOUPAGE ET DE GRAVURE LASER COMBINÉ, DE BRODERIE COMBINÉE ET SYSTÈME DE DÉCOUPAGE ET DE GRAVURE LASER ET DE BRODERIE

(30) Priority: 12.11.2015 IT UB20155547
(43) Date of publication of application: 17.05.2017
(73) Proprietor: GMI S.R.L., 31029 Vittorio Veneto, TV (IT)
(72) Inventor: Battiston, Arrigo, 31029 Vittorio Veneto (TV) (IT); Battiston, Giacomo, 31029 Vittorio Veneto (IT)
(74) Representative: Münchow, Vera Ute Barbara

(56) References cited:
- WO-A2-2014/044498
- US-A- 5 915 316

## Description

### TECHNICAL FIELD

The present invention relates to a process for the calibration of an automatic electronically controlled combined laser cutting and engraving and embroidering system and to a related automatic electronically controlled combined laser cutting and engraving and embroidering system. These systems allow a combined laser cutting and engraving and embroidering processing.

### PRIOR ART

The prior art knows the combination of one or more embroidery machines with a laser bridge that performs register laser processing with the embroidery machine to embroider and cut/engrave fabrics, cloths, leathers and similar materials of embroiderable type and laser cuttable/engravable. These devices are able to perform cuts and engravings in predetermined positions and with predetermined shapes and sizes of materials which are embroidered by special embroidery heads incorporated in these machines.

These combinations between an embroidery machine and a laser cutting and engraving device substantially comprise a working plane defined in the x and y coordinates on which are arranged the various materials to be embroidered and which is mobile in the direction of the x and y coordinates under the embroidering needles mounted in a series of embroidery heads arranged in a fixed manner in the direction of the x coordinate. The embroidery heads are arranged to embroider the materials with threads of different type and colour. Furthermore, such systems comprise at least one laser cutting and engraving head which is slidable in the direction of the x coordinate along the working plane. Furthermore, these systems are automatically controlled by electronic control systems and by different cutting, engraving and embroidery programs. Both the different embroidery heads (that is, their needles maintaining the head itself fixed) and the mobile frame are operated at the same time, in the directions of x and y coordinates with synchronized movements such as to determine the seam with the threads of the required types and colours. In particular, the laser cutting and engraving device of these automatic embroidery machines is constituted substantially by a CO₂ laser beam source, suitable to generate a laser beam, intended to cut and/or engrave the materials to be embroidered arranged on the working plane and manageable via a system of lenses and deflection mirrors to deflect the path of the laser beam and to direct it on the materials to be embroidered in the cutting and engraving points established from time to time in each working program. For example, such systems are described in the document EP 1 657 337 B1 in the name of the applicant.

Common problem to these systems of embroidery machines combined with laser cutting and engraving devices is the fact that the embroidery needle and the laser beam often, in reality, are not perfectly aligned, e.g., due to an inclination of the needle during the processing, and that the calibration of the respective needle and laser beam positions must be done manually with a great loss of time. Closest prior art document US-A-5 915 316 discloses a multiple sewing head embroidering machine with a laser processing function provided for each sewing head. An image acquisition device and a reference sign applied by the needle are not disclosed in this document.

### DISCLOSURE OF THE INVENTION

Object of the invention is to propose a combined laser cutting and engraving and embroidering system which provides a calibration system to align the embroidery needle with the laser beam and a related calibration process which overcome the aforementioned drawback and allow a high precision in the combined execution of embroidery and laser cutting/engraving on a same base material.

The object is achieved by a combined laser cutting and engraving and embroidering system, as defined in the first claim and, precisely, by an automatic electronically controlled combined laser cutting and engraving and embroidering system which comprises one or more working planes defined in the x and y coordinates to position a base material to be cut or engraved and embroidered, wherein said one or more working planes are mobile in a defined manner in the directions of the x and y coordinates; one or more embroidery heads with respective embroidery needles; at least a laser cutting and engraving device, wherein the position of the beam is adjustable in the x and y coordinates of said one or more working planes; a control unit suitable to control said one or more embroidery heads and said one or more working planes according to an embroidery program memorized in said control unit to realize an embroidery on said base material and suitable to control said at least one laser cutting and engraving device according to a cutting and/or engraving program memorized in said control unit to realize a cut and/or an engraving on said base material. The combined laser cutting and engraving and embroidering system is characterized in that it furthermore comprises an image acquisition device suitable to acquire the image of a first at least bidimensional reference sign applied by a needle of said one or more embroidery heads and an at least bidimensional second reference sign applied by the laser beam of said at least one laser cutting and engraving device on a laser cuttable and/or engravable, embroiderable support which is arrangeable on said one or more working planes where said control unit comprises programs to execute said reference signs; electronic calibration means configured to process the acquired data regarding said reference signs to calculate from the distance of said first and of said second reference sign in the image the real distance of the reference signs, and thus of the operation points of said needle and of said laser beam on said one or more working planes; and communication means between said electronic calibration means and said control unit; wherein said electronic calibration means are configured to transmit the data regarding said real distance to said control unit; and wherein said control unit is configured to command, respectively, said laser cutting and engraving device on the basis of said real distance to position, respectively, said laser cutting and engraving device and said laser beam in the desired position with respect to said operation points of said needle.

The at least bidimensional reference sign is to be intended, as already said by the specification "at least bidimensional", not as a single point. It could be a point pattern (a point composition).

Advantageously, a combined system according to the invention is a combination of a laser cutting and engraving device with an embroidery machine. For this purpose, it is possible to use embroidery machines and laser cutting and engraving devices similar to those commonly available on the market.

The term embroidery refers not only to very complex embroidery decorations, but also to simple seams, such as those for the simple fastening of an applique on a fabric. Advantageously, the stitches applied by the system according to the invention are selected among back stitch, stem stitch, chain stitch, flat stitch, double or open chain stitch, brocatel stitch, star stitch, French stitch, Palestrina stitch, bullion stitch, curly stitch, satin stitch, etc.

Preferably, the embroidery program and the cutting and/or engraving program allow to realize, in an embroidered or cut/engraved form, images, decorations, patterns, graphic motifs in general.

The presence of the image acquisition device and the electronic calibration means allows to determine the exact position of the operation point of a laser beam on the working plane with respect to the position of the operation point of the embroidery needle on the working plane, i.e., the distance between these operation points of the laser beam and of the needle. This distance is determined on the basis of an image that represents two reference signs, respectively performed by the laser beam and by the needle.

Such calibration can take place via the calibration of the vision system, the subsequent identification of the embroidery pattern for the definition of the vision plan and, thus, the detection of the laser cuts on the image plane, then following the manual process used up to now for the laser calibration.

More conveniently, according to a preferred embodiment of the invention, the distance intrinsic to the reference signs in the image is determinable with a calibration system of the image, based for example on the number of pixels between the two signs. Advantageously, the knowledge of the virtual distance on the image can be translated into a real distance of the reference signs on the working plane. A distance expressed in pixels can be translated into a distance expressed in millimetres (or millimetres multiples or submultiples) through the use of a scale factor easily definable by a person skilled in the art; preferably locally approximated by the use of the pixel distance between holes made by the embroidery head. The image acquisition device does not need a specific calibration to do this translation. If this distance does not correspond to that provided by the embroidery and cutting/engraving programs, the control unit is able to correspondingly correct the position of the laser beam with respect to the needle.

Advantageously, the distance of the holes made by the embroidery head is used as internal calibration. If the distance of the holes should not be corresponding to the nominal distance provided by the embroidery program, the error is transmitted also to the laser, having used the holes as internal calibration, with the result of positioning it still in the correct position with respect to the needle, even if this latter should not work optimally.

In order to have an exact mutual positioning of the laser beam and of the needle, it is theoretically indifferent if you move the embroidery head/the needle with respect to the laser beam or vice versa. The up to date feasible solution is the laser displacement.

Of course, the inventive concept can also be transferred to systems in which the working plane is not mobile, but in which the embroidery heads are mobile in the x and y directions of the working plane during the embroidery.

For the embroidery head displacement it is possible, e.g., to think about a track system wherein the embroidery head is located on a rod along which it is mobile in the x direction of the working plane and, where the rod is displaceable on a frame with related tracks in the y direction of the working plane. Also embroidery heads moved by a robot arm are conceivable.

The x and y coordinates are to be considered as coordinates of the Cartesian reference system formed by two orthogonal lines intersecting at a point called origin which define the working plane.

Advantageously, the base material is selected among a synthetic, artificial or natural fiber fabric or combinations thereof, leather and a plastic material film. Obviously, the base material may be of any material that can be sewn or embroidered or engraved/cut by a laser, as well as, possibly, also metal films or thin cork sheets.

The reference signs can be of various type, but it is important that they are at least bidimensional to allow the determination of the aforementioned distances from the image. In a preferred variant of the invention, the first reference sign is represented by holes executed by the needle in the laser cuttable or engravable and embroiderable support, preferably arranged in a cross-shape, and the second reference sign is represented by cutting and/or engraving lines executed by the laser cutting and engraving device, preferably arranged in a cross-shape. These signs are easily and rapidly performable.

Preferably, the combined laser cutting and engraving and embroidering system according to the invention further comprises one or more frames to fix and tension a material to be processed, as well as the base material or the calibration support, on said one or more working planes.

In an advantageous embodiment of the invention, the image acquisition device is located in the laser cutting and engraving device. In this case the image acquisition device is easily positionable together with the positioning of the laser cutting and engraving device at the corresponding reference sign performed. Alternatively, the image acquisition device may be independent from the laser cutting and engraving device; or, in a more expensive and laborious version concerning the succession of the reference signs realization and of the image acquisition, each embroidery head might contain or share (a camera is used by different embroidery heads) an image acquisition device .

According to a possible and preferred embodiment of the invention, the combined laser cutting and engraving and embroidering system comprises a plurality of embroidery heads arranged in a fixed configuration side by side in a row extending along the x direction of said one or more working planes wherein the row of embroidery heads is optionally movable in its entirety in the y direction of said one or more working planes and wherein the laser cutting and engraving device is mobile along said x direction, where the x direction coincides with the longitudinal sense of the working plane.

Preferably, the image acquisition device is a camera, as an intelligent camera or a smart compact camera which, as known, integrates in the same container both the camera module and the image processing module and an interface module. In this case the image processing module of the camera may already contain the electronic calibration means, which, alternatively, may also be integrated in the control unit structure or form an external system to both the image acquisition device and the control unit.

Other exemplary types of image acquisition devices, are, e.g., LED or laser devices with corresponding electro-optical transducers. Advantageously, the image acquisition device identifies and extracts, e.g., through an optical reader using a camera the significant information of the reference signs.

The calibration electronic means may, advantageously, determine the position of the reference signs on the image performing image processing algorithms of a known type, such as, e.g., blob analysis algorithms/methods (i.e., research and measurement of spots contained in the image) and edge detection algorithms/methods, i.e., research of edges/contours of spots in an image. Another aspect of the invention relates to a process for the calibration of an automatic electronically controlled combined laser cutting and engraving and embroidering system which comprises the following steps:
(a) positioning of a laser cuttable or engravable and embroiderable support on a working plane defined in the x and y coordinates;
(b) with a needle of an embroidery head of said combined laser cutting and engraving and embroidering system execution of a first at least bidimensional reference sign on said support;
(c) with a laser beam of said combined laser cutting and engraving and embroidering system execution of a second at least bidimensional reference sign on said support;
(d) acquisition of an image of both reference signs with an image acquisition device;
(e) processing of the data collected in the preceding step (d) and determining the distance of said reference signs in the image and translation of said distance of said reference signs on the image into the real distance of the reference signs, and thus the operation points of said needle and said laser beam, on said one or more working planes;
(f) transmission of said real distance on said working plane to a control unit which controls said laser beam ad execution of calculations to determine the correctness of the real distance with respect to defined embroidery and cutting or engraving programs and potentially to correct the position of the operation point of said laser beam with respect to the operation points of said needle on the working plane; and, if necessary,
(g) appropriate correction of the position of said laser beam with respect to the operation points of said needle on said working plane.

The order of steps (b) and (c) is not important, step (b) may take place before step (c) and vice versa. In case the image acquisition device is in the laser cutting and engraving device it is preferable to perform step (b) before step (c) in order to limit the number of placements required to perform the calibration. Preferably, the process according to the invention is performed with a combined laser cutting and engraving and embroidery system according to the invention. In this case, the process according to the invention also comprises, before step (a), the preparation of a combined laser cutting and engraving and embroidery system according to the invention.

The features described for the combined laser cutting and engraving and embroidery system may be transferred *mutatis mutandis* to the process according to the invention and *vice versa.*

With the combined laser cutting and engraving and embroidery system and the calibration process according to the invention, it is possible to precisely determinate and correct the positions of the operation points of the laser beam and the needles on the working plane. The process is faster and more precise than the manual processes known from the prior art.

Said objects and advantages will be better highlighted during the description of preferred embodiment examples of the invention given, by way of example and not of limitation.

Variants of the invention are the object of the dependent claims. The description of preferred embodiment examples of the combined laser cutting and engraving and embroidery system and of the calibration process according to the invention is given by way of example and not of limitation.

### BRIEF DESCRIPTION OF THE DRAWINGS

- Fig. 1: shows a schematic front view of an embodiment according to the invention of a combined laser cutting and engraving and embroidering system including an automatic embroidery machine provided with a laser cutting and engraving device featuring an image acquisition device;
- Fig. 2: shows in a schematic top view the embodiment according to Figure 1; and
- Fig. 3: shows an image captured by the image acquisition device of Figures 1 and 2 of the reference signs carried out by the needle and by the laser beam of the combined laser cutting and engraving and embroidering system according to Figures 1 and 2.

### DESCRIPTION OF A PREFERRED EMBODIMENT EXAMPLE

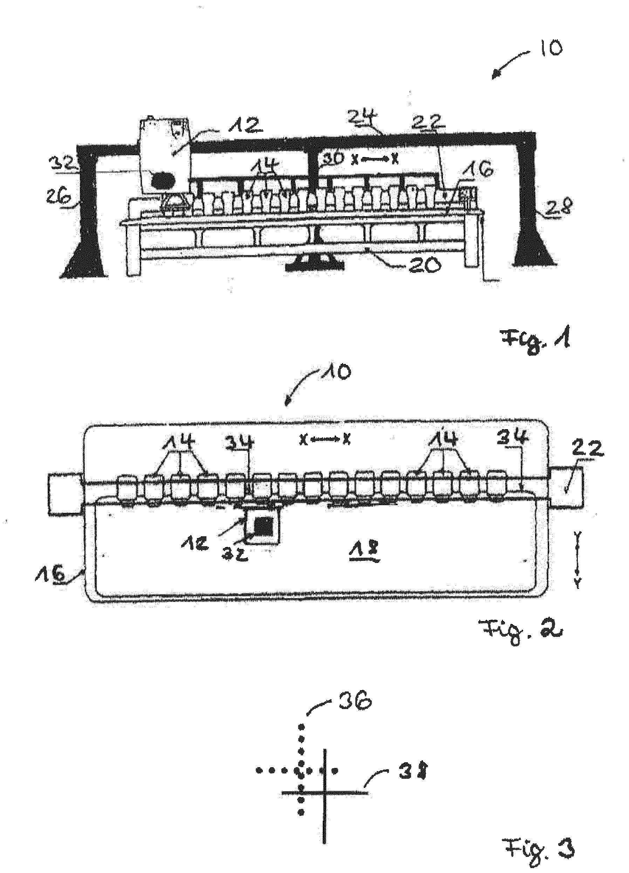

In Figures 1 and 2 it is shown schematically a combined laser cutting and engraving and embroidering system **10** including an automatic embroidery machine with electronic control, featuring a laser cutting and engraving device **12**, suitable to perform cuts and engravings according to predetermined positions, shapes and sizes on fabrics, cloths, leather, cork and similar material suitable to be embroidered and laser processed, hereinafter referred to, for brevity, "base material", which are embroidered by specific embroidery heads **14** embedded in this machine. The embroidery machine basically includes a rectilinear lengthened and horizontal table **16**, which comprises a frame **34** defining a horizontal working plane **18** on which the different base materials are arranged, the table **16** being supported on the floor by a suitable support structure **20**. The frame **34** is actuated by traditional motors and transmissions according to established programs stored in a proper electronic control system, with alternate movements in a longitudinal direction (**x** direction) and a transverse direction (**y** direction), under the sewing needles which embroider, mounted in a series of stationary, identical embroidery heads **14** (in other not shown embodiments example, the heads may be different from each other), which are arranged to embroider the base materials with threads of different kind and colour, and are supported by a rectilinear horizontal bar **22** located above the working plane **18** and fixed to the support structure **20**. The bar may or may not be mobile in the **y** direction. The laser cutting and engraving device **12** is slidable along a rectilinear horizontal bar **24** which is supported, above and spaced with respect to the embroidery heads **14**, by vertical uprights **26**, **28** and **30** fixed to the floor in the central and lateral positions with respect to the mobile frame/embroidery heads assembly. Of course, the number of the uprights may vary. The laser cutting and engraving device **12** is provided with a camera **32**, for example fixed in the lower part of the laser cutting and engraving device. The frame **34** may feature fastening means, such as clamps, to fix the base materials on the working plane **18**.

Before the start of each embroidery program to embroider different base materials, the materials to be embroidered are arranged on the working surface **18** of the embroidery machine. Subsequently, the embroidery heads **14** are advanced by the movement of the bar in the **y** direction above the base materials or the base materials are brought with a movement of the frame **34** under the embroidery heads. These materials to be embroidered, which can also possibly overlap completely or partially, are for example placed on a relative support cloth of suitable material (so-called "fliselina", not shown), or on a subframe for each embroidery head leaning on the working plane **18**. Then, the different embroidery heads **14** are actuated and, simultaneously, the movable frame **34** moved in the longitudinal and transverse directions **x** and **y**, with synchronized movements in order to determine the seam with the types and colours of the threads required to embroider simultaneously all the base materials, while the laser cutting and engraving device **12** is inactive and is located in its rest position or is working on another connected embroidery machine. At the end of the stitching of all the base materials, the mobile frame **34** and all the embroidery heads **14** are arrested and - if applicable - the bar **22** goes back for not being located above the embroidered area of the base materials. In the next step, the laser cutting and engraving device **12** is triggered with a movement along the bar **24** in the **x** direction, progressively shifting at each base material to be engraved/cut, where such device cut or engrave the materials in the set position with the laser beam. At completion, all exceeding materials are removed, thus leaving the base materials, embroidered and cut/engraved according to the desired shapes. Once these operations are completed, the processed base materials can be removed from the working plane **18**, while the laser cutting and engraving device **12** is brought with a reverse movement along the bar **24** in its rest position, or on another embroidery machine; and in this condition the machine is ready to perform additional operating programs in the same way or to continue the current operating program with the new phases of material supply, embroidery and cutting/engraving, even in a different order. The system allows multi-layer processing, it is possible to apply on the same base material different sequences of embroidery, cutting and engraving.

Before carrying out the aforementioned processing steps or after a defined number of processing cycles, the calibration of the combined system **10** is required, i.e. the alignment of the laser beam of the laser cutting and engraving device **12** with the needles of the embroidery heads **14**. For this purpose, for example, the working surface **18** should be advanced under the embroidery heads **14** in their working position and the control unit (not shown) carries out, with a defined calibration program by each embroidery head **14**, a first reference sign **36** on a suitable support, by actuating the embroidery heads **14** and the frame **34**. In the present case, the reference sign is a cross formed by holes made by the respective needle in the support (the thread is not inserted simultaneously).

The working plane is then moved under the laser cutting and engraving device **12** which performs, in every working position, i.e. at each corresponding first applied reference sign **36** and according to an established program, a second reference sign **38** on the aforementioned support. In this case, the reference sign **38** is for example a cross formed by two continuous lines. Once the work is completed, the camera **32** embedded in the laser cutting and engraving device **12** takes a picture of the two reference signs **36** and **38**.

Figure 3 shows the picture of the two reference signs **36** and **38**, as found on the calibration support. The picture is then processed. According to the number of pixels between the two reference signs, it is possible to express the distance between the signs **36** and **38** in pixels and, subsequently, to translate it into a distance expressed in millimetres or multiples or submultiples thereof. The information on the distance between the needle and laser beam are used by the control unit to possibly correct the position of the laser beam with respect to the position of the needles and in order to then perform the cutting or incision in the correct position with respect to the position of the embroidery. The adjustment of the position of the laser beam, resulting, for example, from a source of CO₂ laser beam, takes place via a series of components adapted to focus and deflect the laser beam, such as an optical lens system arranged along the path of the laser beam, for example with variable focal distance as disclosed, for example, in EP 1 657 337 B1, and a system of deflection mirrors arranged in the same path of the laser beam, downstream the optical lens system, in order to divert the path of the laser beam and direct it on the underlying embroidered materials arranged on the working plane **18** of the embroidery machine.

The camera can also, for example, be independent from the laser cutting and engraving device and move following the laser cutting and engraving device along the bar **24**.

During implementation, further embodiment modifications or execution variants of the combined laser cutting and engraving and embroidering system and calibration process of the invention, not described herein, may be implemented. If such modifications or such variants should fall within the scope of the following claims, they should all be considered protected by the present patent.

## Claims

1. Automatic electronically controlled combined laser cutting and engraving and embroidering system (10) comprising:
(a) one or more working planes (18) defined by the x and y coordinates to position a base material to be cut or engraved and to be embroidered, wherein said one or more working planes are mobile in a defined manner in the directions of the x and y coordinates;
(b) one or more embroidery heads (14) with respective embroidery needles;
(c) at least a laser cutting and engraving device (12) wherein the position of the beam is adjustable in the x and y coordinates of said one or more working planes (18);
(d) a control unit suitable to control said one or more embroidery heads (14) and said one or more working planes (18) according to an embroidery program memorized in said control unit to realize an embroidery on said base material and suitable to control said at least one laser cutting and engraving device (12) according to a cutting and/or engraving program memorized in said control unit to realize a cut and/or an engraving on said base material,
**characterized in that** the system further comprises
(e) an image acquisition device (32) suitable to acquire the image of a first at least bidimensional reference sign (36) applied by a needle of said one or more embroidery heads (14) and an at least bidimensional second reference sign (38) applied by the laser beam of said at least one laser cutting and engraving device (12) on a laser cuttable and/or engravable, embroiderable support which is arrangeable on said one or more working planes (18) where said control unit comprises programs to execute said reference signs;
(f) electronic calibration means configured to process the acquired data regarding said reference signs (36, 38) to calculate from the distance of said first (36) and of said second reference sign (38) in the image the real distance of the reference signs, and thus of the operation points of said needle and of said laser beam on said one or more working planes (18); and
(g) communication means between said electronic calibration means and said control unit;
wherein said electronic calibration means are configured to transmit the data regarding said real distance to said control unit;
and wherein said control unit is configured to command, respectively, said laser cutting and engraving device (12) on the basis of said real distance to position, respectively, said laser cutting and engraving device (12) and said laser beam in the desired position with respect to said operation points of said needle.

2. Automatic electronically controlled combined laser cutting and engraving and embroidering system (10) according to claim 1 **characterized in that** the image acquisition device is not calibrated.

3. Automatic electronically controlled combined laser cutting and engraving and embroidering system (10) according to claim 1 or 2 **characterized in that** said first reference sign (36) is represented by holes executed by said needle in said laser cuttable and/or engravable and embroiderable support, preferably arranged in a cross-shape, and that said second reference sign (38) is represented by cutting or engraving lines executed by said laser cutting and engraving device (12), preferably arranged in a cross-shape.

4. Automatic electronically controlled combined laser cutting and engraving and embroidering system (10) according to anyone of the preceding claims **characterized in that** the system further comprises one or more frames (34) to fix and tension the material to be processed on said one or more working planes (18).

5. Automatic electronically controlled combined laser cutting and engraving and embroidering system (10) according to anyone of the preceding claims **characterized in that** said image acquisition device (32) is located in the laser cutting and engraving device (12).

6. Automatic electronically controlled combined laser cutting and engraving and embroidering system (10) according to anyone of the preceding claims **characterized in that** the system comprises a plurality of embroidery heads (14) arranged in a fixed configuration side by side in a row extending along the x direction of said one or more working planes (18) wherein said row of embroidery heads (14) is optionally movable in its entirety in the y direction of said one or more working planes (18) and **in that** said laser cutting and engraving device (12) is mobile along said x direction, where the x direction coincides with the longitudinal sense of the working plane (18).

7. Process for the calibration of an automatic electronically controlled combined laser cutting and engraving and embroidering system (10) comprising the following steps:
(a) positioning of a laser cuttable or engravable and embroiderable support on a working plane (18) defined in the x and y coordinates;
(b) with a needle of an embroidery head (14) of said automatic electronically controlled combined laser cutting and engraving and embroidering system (10) execution of a first at least bidimensional reference sign (36) on said support;
(c) with the laser beam of said automatic electronically controlled combined laser cutting and engraving and embroidering system (10) execution of a second at least bidimensional reference sign (38) on said support;
(d) acquisition of an image of both reference signs (36, 38) with an image acquisition device (32);
(e) processing of the data collected in the preceding step (d) and determining the distance of said reference signs (36, 38) in the image and translation of said distance of said reference signs (36, 38) on the image into the real distance of the reference signs, and thus the operation points of said needle and said laser beam, on said one or more working planes (18);
(f) transmission of said real distance on said working plane (18) to a control unit which controls said laser beam and execution of calculations to determine the correctness of the real distance with respect to defined cutting or engraving programs and to embroidery programs and potentially to correct the position of the operation point of said laser beam with respect to the operation points of said needle on the working plane; and, if necessary,
(g) appropriate correction of the position of said laser beam with respect to the operation points of said needle on said working plane (18).

8. Process according to claim 7 **characterized in that** in step (d) a non-calibrated image acquisition device is used.

9. Process according to claim 7 or 8 **characterized in that** the distance of said reference signs on the image is expressed in a determined number of pixels and **in that** said distance expressed in pixels is translated into a real distance of the reference signs (36, 38) on the working plane (18) expressed in millimetres or multiples or submultiples of millimetres.

10. Process according to anyone of the claims from 7 to 9 **characterized in that** the process comprises before step (a) the preparation of an automatic electronically controlled combined laser cutting and engraving and embroidering system according to anyone of the claims from 1 to 6.

## Patentansprüche

1. Automatisches elektronisch gesteuertes kombiniertes Laserschneid- und -gravur- und Sticksystem (10) umfassend:
(a) eine oder mehrere Arbeitsebenen (18), die durch die x- und y-Koordinaten definiert sind, um ein zu schneidendes oder zu gravierendes und zu bestickendes Basismaterial zu positionieren, wobei besagte eine oder mehrere Arbeitsebenen in den Richtungen der x- und y-Koordinaten definiert beweglich sind;
(b) einen oder mehrere Stickköpfe (14) mit entsprechenden Sticknadeln;
(c) mindestens eine Laserschneid- und -graviervorrichtung (12), worin die Position des Strahls in den x- und y-Koordinaten besagter einer oder mehrerer Arbeitsebenen (18) einstellbar ist;
(d) eine Steuereinheit, die geeignet ist, besagten einen oder besagte mehrere Stickköpfe (14) und besagte eine oder mehrere Arbeitsebenen (18) gemäß einem in besagter Steuereinheit gespeicherten Stickprogramm zu steuern, um eine Stickerei auf besagtem Basismaterial zu realisieren und, die geeignet ist besagte mindestens eine Laserschneid- und -graviervorrichtung (12) gemäß einem in besagter Steuereinheit gespeicherten Schneid- und / oder Gravierprogramm zu steuern, um einen Schnitt und/oder eine Gravur auf besagtem Basismaterial zu realisieren,
**dadurch gekennzeichnet, dass** das System ferner umfasst
(e) eine Bilderfassungsvorrichtung (32), die geeignet ist, das Bild eines ersten mindestens zweidimensionalen Referenzzeichens (36), das von einer Nadel besagten einen oder besagter mehrerer Stickköpfe (14) aufgebracht wird, und eines mindestens zweidimensionalen zweiten Referenzzeichens (38), dass durch den Laserstrahl besagter mindestens einen Laserschneid- und Graviervorrichtung (12) auf einen laserschneidbaren und/oder -gravierbaren, bestickbaren Träger aufgebracht wird, der auf besagter einen oder besagten mehreren Arbeitsebenen (18) anordbar ist, zu erfassen, wobei besagte Steuereinheit Programme umfasst, um besagte Bezugszeichen ausführen;
(f) elektronische Kalibrierungsmittel, die konfiguriert sind, um die erfassten Daten bezüglich besagter Referenzzeichen (36, 38) zu verarbeiten, um aus dem Abstand besagten ersten (36) und besagten zweiten Referenzzeichens (38) in dem Bild die tatsächliche Entfernung der Referenzzeichen und somit der Arbeitspunkte besagter Nadel und besagten Laserstrahls auf besagter einer oder besagten mehreren Arbeitsebenen (18) zu berechnen; und
(g) Kommunikationsmittel zwischen besagten elektronischen Kalibrierungsmitteln und besagter Steuereinheit;
wobei besagte elektronische Kalibrierungsmittel so konfiguriert sind, dass sie die Daten bezüglich der tatsächlichen Entfernung an die Steuereinheit übertragen;
und wobei besagte Steuereinheit so konfiguriert ist, dass sie die Laserschneid- und - graviervorrichtung (12) jeweils auf der Grundlage der tatsächlichen Entfernung so steuert, dass besagte Laserschneid- und -graviervorrichtung (12) bzw. besagter Laserstrahl in der gewünschten Position bezüglich besagter Arbeitspunkte der Nadel positioniert wird.

2. Automatisches elektronisch gesteuertes kombiniertes Laserschneid- und -gravier- und Sticksystem (10) nach Anspruch 1, **dadurch gekennzeichnet, dass** das Bilderfassungsgerät nicht kalibriert ist.

3. Automatisches elektronisch gesteuertes kombiniertes Laserschneid- und -gravier- und Sticksystem (10) nach Anspruch 1 oder 2, **dadurch gekennzeichnet, dass** besagtes erstes Bezugszeichen (36) durch Löcher dargestellt ist, die von besagter Nadel in besagtem laserschneidbaren und/oder -gravierbaren und bestickbaren Träger, vorzugsweise in einer Kreuzform angeordnet, ausgeführt werden, und dass besagtes zweites Bezugszeichen (38) durch Schneid- oder Gravierlinien dargestellt ist, die von besagter Laserschneid- und -graviervorrichtung (12), vorzugsweise in einer Kreuzform angeordnet, ausgeführt werden.

4. Automatisches elektronisch gesteuertes kombiniertes Laserschneid- und -gravier- und Sticksystem (10) nach einem der vorhergehenden Ansprüche, **dadurch gekennzeichnet, dass** das System ferner einen oder mehrere Rahmen (34) umfasst, um das zu bearbeitende Material auf besagter einer oder besagten mehreren Arbeitsebenen (18) zu befestigen und zu spannen.

5. Automatisches elektronisch gesteuertes kombiniertes Laserschneid- und -gravier- und Sticksystem (10) nach einem der vorhergehenden Ansprüche, **dadurch gekennzeichnet, dass** die Bilderfassungsvorrichtung (32) in der Laserschneid- und -graviervorrichtung (12) angeordnet ist.

6. Automatisches elektronisch gesteuertes kombiniertes Laserschneid- und -gravier- und Sticksystem (10) nach einem der vorhergehenden Ansprüche, **dadurch gekennzeichnet, dass** das System eine Vielzahl von Stickköpfen (14) umfasst, die in einer festen Konfiguration Seite an Seite in einer Reihe angeordnet sind, die sich entlang der x-Richtung besagter einer oder besagter mehrerer Arbeitsebenen (18) erstreckt, wobei besagte Reihe von Stickköpfen (14) wahlweise in ihrer Gesamtheit in der y-Richtung besagter einer oder besagter mehrerer Arbeitsebenen (18) bewegbar ist und dadurch, dass besagte Laserschneid- und -graviervorrichtung (12) entlang besagter x-Richtung beweglich ist, wobei die x-Richtung mit der Längsrichtung der Arbeitsebene (18) übereinstimmt.

7. Verfahren zur Kalibrierung eines automatischen elektronisch gesteuerten kombinierten Laserschneid- und -gravur- und Sticksystems (10), umfassend die folgenden Schritte:
(a) Positionieren eines laserschneidbaren oder -gravierbaren und bestickbaren Trägers auf einer Arbeitsebene (18), die in den x- und y-Koordinaten definiert ist;
(b) mit einer Nadel eines Stickkopfes (14) besagten automatischen elektronisch gesteuerten kombinierten Laserschneid- und -gravier- und Sticksystems (10) Ausführung eines ersten mindestens zweidimensionalen Referenzzeichens (36) auf dem Träger;
(c) mit dem Laserstrahl des automatischen elektronisch gesteuerten kombinierten Laserschneid- und -gravier- und Sticksystems (10) Ausführung eines zweiten mindestens zweidimensionalen Referenzzeichens (38) auf besagtem Träger;
(d) Erfassen eines Bildes beider Referenzzeichen (36, 38) mit einer Bilderfassungseinrichtung (32);
(e) Verarbeiten der in dem vorhergehenden Schritt (d) gesammelten Daten und Ermitteln des Abstandes besagter Bezugszeichen (36, 38) in dem Bild und Übersetzung besagten Abstandes der Bezugszeichen (36, 38) in dem Bild in den tatsächlichen Abstand der Bezugszeichen und somit der Arbeitspunkte besagter Nadel und besagten Laserstrahls auf besagter einer oder besagten mehreren Arbeitsebenen (18);
(f) Übertragung des tatsächlichen Abstandes auf besagter Arbeitsebene (18) an eine Steuereinheit, die besagten Laserstrahl steuert und Ausführung von Berechnungen, um die Richtigkeit des tatsächlichen Abstandes bezüglich definierter Schneid- oder Gravierprogramme zu bestimmen und möglicherweise die Position des Arbeitspunktes besagten Laserstrahls bezüglich der Arbeitspunkte besagter Nadel auf der Arbeitsebene zu korrigieren; und, falls nötig,
(g) geeignete Korrektur der Position des Laserstrahls bezüglich der Arbeitspunkte besagter Nadel auf besagter Arbeitsebene (18).

8. Verfahren nach Anspruch 7, **dadurch gekennzeichnet, dass** in Schritt (d) eine nicht kalibrierte Bilderfassungsvorrichtung verwendet wird.

9. Verfahren nach Anspruch 7 oder 8, **dadurch gekennzeichnet, dass** der Abstand besagter Bezugszeichen auf dem Bild in einer bestimmten Anzahl von Pixeln ausgedrückt wird und dass besagter in Pixeln angegebene Abstand in einen tatsächlichen Abstand der Bezugszeichen (36, 38) auf der Arbeitsebene (18) ausgedrückt in Millimetern oder Vielfachen oder Teilmengen von Millimetern übersetzt wird.

10. Verfahren nach einem der Ansprüche 7 bis 9, **dadurch gekennzeichnet, dass** das Verfahren vor Schritt (a) die Herstellung eines automatisch elektronisch gesteuerten kombinierten Laserschneid- und -gravier- und Sticksystems nach einem der Ansprüche 1 bis 6 umfasst.

## Revendications

1. Système automatique de découpe et de gravure au laser et à broder combiné (10) contrôlé électroniquement, comprenant:
(a) un ou plusieurs plans de travail (18) définis par les coordonnées x et y pour positionner un matériau de base à couper ou à graver et à broder, dans lesquels un ou plusieurs plans de travail sont mobiles d'une manière définie dans les directions des coordonnées x et y ;
(b) une ou plusieurs têtes à broder (14) avec aiguilles à broder respectives ;
(c) au moins un dispositif de découpe et de gravure au laser (12), dans lequel la position du faisceau est réglable dans les coordonnées x et y dudit un ou desdits plusieurs plans de travail (18);
(d) une unité de commande pouvant commander ladite une ou lesdites plusieurs têtes à broder (14) et ledit un ou lesdits plusieurs plans de travail (18) selon un programme à broder mémorisé dans ladite unité de commande pour réaliser une broderie sur ledit matériau de base et pouvant commander ledit au moins un dispositif de découpe et de gravure au laser (12) selon un programme de découpe et/ou de gravure mémorisé dans ladite unité de commande pour réaliser une coupe et/ou une gravure sur ledit matériau de base,
**caractérisé en ce que** le système comprend de plus
(e) un dispositif pour l'acquisition d'images (32) pouvant acquérir l'image d'un premier signe de référence (36) au moins bidimensionnel appliqué par une aiguille de ladite une ou desdites plusieurs têtes à broder (14) et un second signe de référence (38) au moins bidimensionnel appliqué par le faisceau laser dudit au moins un dispositif de découpe et de gravure au laser (12) sur un support qui peut être découpé et/ou gravé au laser, brodé, lequel peut être disposé sur ledit un ou lesdits plusieurs plans de travail (18) où ladite unité de commande comprend des programmes pour exécuter lesdits signes de référence;
(f) moyens de calcul électronique configuré pour traiter les données acquises concernant lesdits signes de référence (36, 38) pour calculer, à partir de la distance dudit premier (36) et dudit second signe de référence (38) dans l'image, la distance réelle des signes de référence, et, par conséquent, des points de fonctionnement de ladite aiguille et dudit faisceau laser sur ledit un ou lesdits plusieurs plans de travail (18) ; et
(g) moyens de communication entre lesdits moyens de calcul électronique et ladite unité de commande ;
lesdits moyens de calcul électronique étant configurés pour transmettre les données concernant ladite distance réelle à ladite unité de commande;
et ladite unité de commande étant configurée pour commander respectivement ledit dispositif de découpe et de gravure au laser (12) sur la base de la distance réelle pour positionner, respectivement, ledit dispositif de découpe et de gravure au laser (12) et ledit faisceau laser dans la position désirée par rapport audits points de fonctionnement de ladite aiguille.

2. Système automatique de découpe et de gravure au laser et à broder combiné (10) contrôlé électroniquement selon la revendication 1, **caractérisé en ce que** le dispositif pour l'acquisition d'images n'est pas calibré.

3. Système automatique de découpe et de gravure au laser et à broder combiné (10) contrôlé électroniquement selon la revendication 1 ou 2 **caractérisé en ce que** ledit premier signe de référence (36) est représenté par des trous exécutés par ladite aiguille dans ledit un support qui peut être découpé et/ou gravé au laser, brodé, de préférence disposé dans une forme de croix, et que ledit second signe de référence (38) est représenté par des lignes de découpe ou de gravure, exécutés par ledit dispositif de découpe et de gravure au laser (12), de préférence disposé dans une forme de croix.

4. Système automatique de découpe et de gravure au laser et à broder combiné (10) contrôlé électroniquement selon l'une quelconque des revendications précédentes, **caractérisé en ce que** le système comprend de plus un ou plusieurs châssis (34) pour fixer et tensionner le matériau à transformer sur ledit un ou lesdits plusieurs plans de travail (18).

5. Système automatique de découpe et de gravure au laser et à broder combiné (10) contrôlé électroniquement selon l'une quelconque des revendications précédentes, **caractérisé en ce que** ledit dispositif pour l'acquisition d'images (32) est situé dans le dispositif de découpe et de gravure au laser (12).

6. Système automatique de découpe et de gravure au laser et à broder combiné (10) contrôlé électroniquement selon l'une quelconque des revendications précédentes, **caractérisé en ce que** le système comprend une pluralité de têtes à broder (14) disposées dans une configuration fixe côte à côte dans une rangée se prolongeant le long de la direction x dudit un ou desdits plusieurs plans de travail (18), ladite rangée de têtes à broder (14) étant éventuellement mobile, dans son ensemble, dans la direction y dudit un ou desdits plusieurs plans de travail (18) et dans lequel le dispositif de découpe et de gravure au laser (12) est mobile le long de la direction x, la direction x coïncidant avec le sens longitudinal du plan de travail (18).

7. Procédé pour l'étalonnage d'un système automatique de découpe et de gravure au laser et à broder combiné (10) contrôlé électroniquement comprenant les étapes suivantes :
(a) positionner un support qui peut être découpé ou gravé au laser et brodé sur un plan de travail (18) défini par les coordonnées x et y ;
(b) avec une aiguille d'une tête de broderie (14) dudit système automatique de découpe et de gravure au laser et à broder combiné (10) contrôlé électroniquement, effectuer un premier signe de référence (36) au moins bidimensionnel sur ledit support;
(c) avec le faisceau laser dudit système automatique de découpe et de gravure au laser et à broder combiné (10) contrôlé électroniquement, effectuer un second signe de référence (38) au moins bidimensionnel sur ledit support;
(d) acquérir une image des deux signes de référence (36, 38) avec un dispositif pour l'acquisition d'images (32);
(e) traiter les données recueillies dans l'étape précédente (d) et déterminer la distance desdits signes de référence (36, 38) dans l'image et traduire ladite distance desdits signes de référence (36, 38) sur l'image en une distance réelle des signes de référence, et par conséquent les points de fonctionnement de ladite aiguille et dudit faisceau laser, sur ledit un ou lesdits plusieurs plans de travail (18);
(f) transmettre ladite distance réelle sur ledit plan de travail (18) à une unité de commande qui contrôle ledit faisceau laser et effectuer de calcules pour déterminer la justesse de la distance réelle par rapport aux programmes définis de découpe ou de gravure et par rapport aux programmes de broderie, et potentiellement pour corriger la position du point de fonctionnement dudit faisceau laser par rapport aux points de fonctionnement de ladite aiguille sur le plan de travail; et, si nécessaire,
(g) corriger d'une manière appropriée la position dudit faisceau laser par rapport aux points de fonctionnement de ladite aiguille sur ledit plan de travail (18).

8. Procédé selon la revendication 7 **caractérisé en ce que** dans l'étape (d) est utilisé un dispositif non calibré pour l'acquisition d'images.

9. Procédé selon la revendication 7 ou 8 **caractérisé en ce que** la distance desdits signes de référence sur l'image est exprimée en un nombre déterminé de pixels et que ladite distance exprimée en pixels est traduite en une distance réelle des signes de référence (36, 38) sur le plan de travail (18) exprimée en millimètres ou multiples ou sous-multiples de millimètres.

10. Procédé selon l'une quelconque des revendications 7 à 9 **caractérisé en ce que** le procédé comprend, avant l'étape (a), la préparation d'un système automatique de découpe et de gravure au laser et à broder combiné contrôlé électroniquement selon l'une quelconque des revendications 1 à 6.
